# EUROPEAN PATENT APPLICATION

(11) **EP 4 648 259 A1**
(43) Date of publication of application: **12.11.2025**
(21) Application number: 25174288.8
(22) Date of filing: 05.05.2025
(51) Int. Cl.: H02J 50/00, H02J 50/20, H02J 50/80, H04W 52/00, H04W 84/12, H04W 74/0816

(54) **METHODS FOR PERFORMING COMMUNICATIONS BETWEEN AMBIMENT POWER ACCESS POINT AND AMBIMENT POWER NON-ACCESS POINT STATION**

(30) Priority: 03.05.2024 US 202463641969 P; 03.05.2024 US 202463641970 P; 30.04.2025 US 202519194043
(71) Applicant: MEDIATEK INC., Hsinchu City 30078 (TW)
(72) Inventor: CHEN, You-Wei, San Jose, 95134 (US); LIU, Jianhan, San Jose, 95134 (US); LU, Kai Ying, San Jose, 95134 (US); WANG, Chao-Chun, San Jose, 95134 (US); PARE, JR., Thomas Edward, San Jose, 95134 (US)
(74) Representative: Pfenning, Meinig & Partner mbB

(57) **Abstract**

A method for performing communications between an ambient power (AMP) access point (AP) (100, 200) and an AMP non-AP station (STA) (100, 200) includes: transmitting, by the AMP AP, a downlink (DL) physical layer protocol data unit (PPDU) to the AMP non-AP STA, wherein the DL PPDU comprises a spoofing preamble (600) and a trigger frame (308) for triggering the AMP non-AP STA to perform a trigger-based (TB) uplink (UL) PPDU transmission; and receiving, by the AMP AP, a TB UL PPDU without any spoofing preamble from the AMP non-AP STA.

## Description

### Field of the Invention

This invention relates to methods for wireless communication capable of performing communications between an ambient power (AMP) access point (AP) and an AMP non-AP station (STA).

### Background of the Invention

Devices that do not require batteries or only need low power have significant marketing attraction, such as radio frequency identification (RFID) devices. It is expected that AMP Internet of Things (IoT) devices that do not have power or have low power will also have significant marketing attraction. However, the current IEEE 802.11 protocol may not be applied to AMP IoT devices that do not have power or have low power.

### Summary of the Invention

The invention aims at providing methods for performing communications between an AMP AP and an AMP non-AP STA, in order to address the above-mentioned issues. This is achieved by methods according to claims 1 and 11, respectively. The dependent claims pertain to corresponding further developments and improvements.

As will be seen more clearly from the detailed description below, the method for performing communications between an AMP AP and an AMP non-AP STA further comprises: transmitting, by the AMP AP, a downlink (DL) physical layer protocol data unit (PPDU) to the AMP non-AP STA, wherein the DL PPDU comprises a spoofing preamble and a trigger frame for triggering the AMP non-AP STA to perform a trigger-based (TB) uplink (UL) PPDU transmission; and receiving, by the AMP AP, a TB UL PPDU without any spoofing preamble from the AMP non-AP STA.

In an embodiment, the bandwidth of the spoofing preamble is 20MHz, the bandwidth of the trigger frame is less than 20MHz, and the bandwidth of the TB UL PPDU is less than 20MHz.

In an embodiment, the method further comprises: receiving, by the AMP AP, report information from the AMP non-AP STA before transmitting the DL PPDU comprising the spoofing preamble and the trigger frame, wherein the report information indicates a type of the AMP non-AP STA.

In an embodiment, the type of the AMP non-AP STA is an active transmission-type AMP non-AP STA or a backscattering-type AMP non-AP STA.

In an embodiment, each of the DL PPDU and the TB UL PPDU comprises an AMP package, and each of the AMP package uses an on-off keying (OOK) format, wherein the AMP package in the DL PPDU carries the trigger frame.

In an embodiment, the AMP package comprises a physical (PHY) header, a media access control (MAC) header, and a frame body.

In an embodiment, a pattern of a sync field in the PHY header in the AMP package comprised in the DL PPDU is different from a pattern of a sync field in the PHY header in the AMP package comprised in the TB UL PPDU, wherein the sync field is used for a synchronization of reception of a corresponding PPDU.

In an embodiment, the pattern of the sync field in the PHY header in the AMP package comprised in the TB UL PPDU acts as an UL transmission indicator.

In an embodiment, the method further comprises: receiving, by the AMP AP, a UL AMP package from the AMP non-AP STA before transmitting the DL PPDU comprising the trigger frame, wherein the UL AMP package carries a trigger request.

In an embodiment, a MAC header of the UL AMP package comprises an indicator for indicating that the trigger request is carried in the UL AMP package.

In an embodiment, the MAC header of the UL AMP package comprises a frame control field, the frame control field comprises a type subfield, and one of multiple reserved entries of the type subfield acts as the indicator.

In an embodiment, a pattern of a sync field in a PHY header of the UL AMP package acts as the trigger request.

In an embodiment, the method further comprises: transmitting, by the AMP AP, a clear to send (CTS)-to-self frame in order to obtain a transmission opportunity (TXOP) before transmitting the DL PPDU comprising the trigger frame.

In an embodiment, the method further comprises: in response to any TB UL PPDU not being received for an estimation period, transmitting, by the AMP AP, a frame to truncate or terminate the TXOP.

In an embodiment, the DL PPDU comprises the spoofing preamble and a DL AMP package, and a MAC header of the DL AMP package comprises an indicator for indicating that the trigger frame is carried in the DL AMP package.

In an embodiment, the MAC header of the DL AMP package comprises a frame control field, the frame control field comprises a type subfield, and one of multiple reserved entries of the type subfield acts as the indicator.

In an embodiment, the DL PPDU comprises the spoofing preamble and a DL AMP package, and a frame body of the DL AMP package comprises an indicator for indicating that the trigger frame is carried in the DL AMP package.

According to an embodiment of the present disclosure, a method for performing communications between an AMP AP and an AMP non-AP STA is provided. The method comprises: receiving, by the AMP non-AP STA, a DL PPDU from the AMP AP, wherein the DL PPDU comprises a spoofing preamble and a trigger frame for triggering the AMP non-AP STA to perform a TB UL PPDU transmission; and transmitting, by the AMP non-AP STA, a TB UL PPDU without a spoofing preamble to the AMP AP.

In an embodiment, the method further comprises: transmitting, by the AMP non-AP STA, report information to the AMP AP before receiving the trigger frame, wherein the report information indicates a type of the AMP non-AP STA.

In an embodiment, the method further comprises: transmitting, by the AMP non-AP STA, an UL AMP package to the AMP AP, wherein a MAC header of the UL AMP package comprises an indicator for indicating that a trigger request is carried in the UL AMP package.

In an embodiment, the method further comprises: determining, by the AMP non-AP STA, a target energy detection threshold (EDT) according to a predetermined bandwidth and a predetermined EDT, wherein the predetermined bandwidth and the predetermined EDT are regulated by IEEE 802.11 standards; and controlling, by the AMP non-AP STA, an UL transmitting (TX) power according to the target EDT.

In an embodiment, the method further comprises: performing, by the AMP non-AP STA, a scaling operation upon the predetermined EDT according to the predetermined bandwidth and a target bandwidth for a UL transmission of the AMP non-AP STA in order to generate the target EDT, wherein the target EDT is less than or equal to the predetermined EDT.

One of the benefits of the present disclosure is that, by the methods of the present disclosure, the PPDU UL and PPDU DL techniques can be applied to the active transmission-type AMP STA and the AMP AP.

### Brief Description of the Drawings

In the following, the invention is further illustrated by way of example, taking reference to the following drawings. Thereof:
FIG. 1 is a diagram illustrating two wireless communication devices according to an embodiment of the present disclosure.
FIG. 2 is a diagram illustrating multiple coverage ranges for multiple transmissions according to an embodiment of the present disclosure.
FIG. 3 is a diagram illustrating a frame exchange between an AMP AP and an AMP STA according to an embodiment of the present disclosure.
FIG. 4 is a diagram illustrating a frame exchange between an AMP AP and an AMP STA according to another embodiment of the present disclosure.
FIG. 5 is a diagram illustrating a control scheme of an UL TX power according to an embodiment of the present disclosure.
FIG. 6 is a diagram illustrating a format of the UL AMP package shown in FIG. 3 and FIG. 4 according to an embodiment of the present disclosure.
FIG. 7 is a diagram illustrating a format of a DL PPDU transmitted by the AMP AP shown in FIG. 3 and FIG. 4 according to an embodiment of the present disclosure.
FIG. 8 is a table illustrating number of patterns of a synchronization field in a PHY header according to an embodiment of the present disclosure.
FIG. 9 is a diagram illustrating formats of a spoofing preamble according to an embodiment of the present disclosure.
FIG. 10 is a flow chart of a method for performing communications between an AMP AP and an AMP STA according to an embodiment of the present disclosure.
FIG. 11 is a flow chart of a method for performing communications between an AMP AP and an AMP STA according to another embodiment of the present disclosure.

### Detailed Description

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ...".

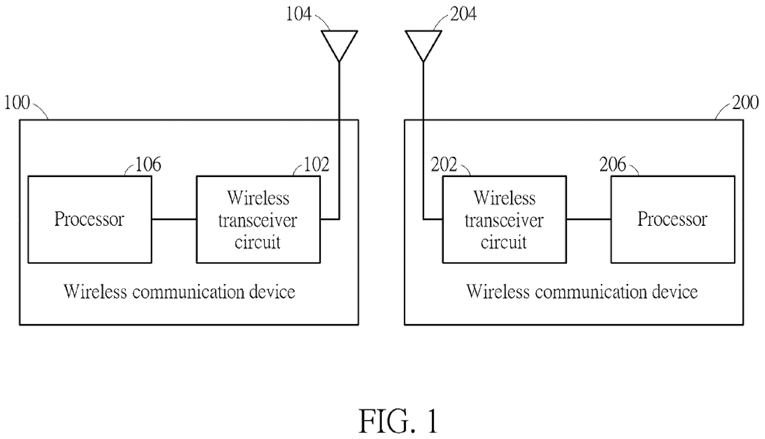

FIG. 1 is a diagram illustrating two wireless communication devices 100 and 200 according to an embodiment of the present disclosure. Each of the wireless communication devices 100 and 200 may be an ambient power (AMP) device complying with IEEE 802.11 11be standards or beyond versions. For example, one of the wireless communication devices 100 and 200 may be implemented as an AMP access point (AP), and another of the wireless communication devices 100 and 200 may be implemented as an AMP non-AP station (STA; for brevity, hereinafter referred to as "AMP STA"), wherein both the AMP AP and the AMP STA may support AMP physical layer protocol data unit (PPDU) reception and transmission. The AMP STA may be an internet of things (IoT) device.

As shown in FIG. 1, the wireless communication device 100 may include a wireless transceiver circuit 102, an antenna 104, and a processor 106. Similarly, the wireless communication device 200 may include a wireless transceiver circuit 202, an antenna 204, and a processor 206. Under a situation that the wireless communication device 100 is implemented as an AMP AP, and the wireless communication device 200 is implemented as an AMP STA, the wireless transceiver circuit 102 may transmit a downlink (DL) PPDU to the wireless communication device 200, and the wireless transceiver circuit 202 may transmit an uplink (UL) PPDU to the wireless communication device 100.

The types of the AMP STA can be divided into three categories (e.g., a type-1 AMP STA, a type-2 AMP STA, and a type-3 AMP STA). For the type-1 AMP STA, the DL PPDU reception is similar to the existing DL PPDU reception compliant with IEEE 802.11 11ba standards, and the UL PPDU transmission complies with existing WLAN standards, such as IEEE 802.11 11b and 11n standards. That is, the type-1 AMP STA may be an AMP enabled STA, such as an STA capable of receiving AMP DL PPDUs (e.g., a high throughput (HT) STA, a non-HT STA, and a high efficiency (HE) STA). For the type-2 AMP STA, the DL PPDU reception is similar to the DL PPDU reception compliant with IEEE 802.11 11ba standards, wherein DL PPDUs may be AMP DL PPDUs with an on-off keying waveform, and the UL PPDU transmission adopts an on-off keying (OOK) format without a spoofing preamble (also referred to as a legacy preamble). That is, the type-2 AMP STA may be referred to as an active transmission-type AMP STA capable of supporting active transmission of AMP UL PPDUs, such as an AMP STA capable of receiving only AMP DL PPDUs and supporting active transmission of AMP UL PPDUs. The active transmission of the AMP UL PPDUs means that the AMP UL PPDU transmission is performed without using backscatter technology. For the type-3 AMP STA, the DL PPDU reception is similar to the DL PPDU reception compliant with IEEE 802.11 11ba standards, wherein DL PPDUs may be AMP DL PPDUs with the on-off keying waveform, and the UL PPDU transmission can be performed by modulating a received DL waveform. That is, the type-3 AMP STA may be a backscattering-type AMP STA capable of performing UL backscattering transmission, such as an AMP STA capable of receiving only AMP DL PPDUs and performing UL backscattering transmission by modulating the received DL waveform. In some embodiments, an AMP STA is required to transmit report information indicating a type of the AMP STA to an AMP AP before the AMP AP triggers a UL PPDU transmission. Since the focus of the present disclosure is on the type-2 AMP STA, the AMP STA will report its classification type as the active transmission-type to the AMP AP by transmitting the report information.

Under a situation that the active transmission-type AMP STA is focus on the low power AMP STA application, the active transmission-type AMP STA will not perform the enhanced distributed channel access (EDCA) mechanism through package detection (PD) to perform the backoff procedure for contending for the channel. As a result, the active transmission-type AMP STA of the present disclosure will adopt a trigger-based (TB) UL transmission. In addition, it is difficult to utilize a request to send (RTS)/clear to send (CTS) frame exchange mechanism for link protection for an AMP STA. For example, since an RTS frame is transmitted in 20 MHz bandwidth and the RTS frame has an orthogonal frequency division multiplexing (OFDM) format, the AMP STA cannot understand the RTS frame. As a result, a CTS-to-Self mechanism is utilized for link protection of a media access control (MAC) level of the active transmission-type AMP STA of the present disclosure. A CTS-to-Self frame with an OFDM format may be transmitted by the AMP AP in order to obtain a transmission opportunity (TXOP). The CTS-to-Self mechanism, however, may have some issues. For example, the timeout for the net allocation vector (NAV) is not defined in the standards. If an AMP package is transmitted in a narrow bandwidth with an OOK format, compared with a PPDU using a wide bandwidth and an OFDM format, the airtime of the AMP package will be long. Therefore, after a TXOP holder (e.g., the AMP AP) transmits the CTS-to-Self frame, if any TB UL PPDU is not received for an estimation period, the AMP AP may truncate or terminate the TXOP. For example, a control frame (CF)-end frame may be transmitted by the AMP AP in order to reset the NAV for terminating the TXOP. In this way, the third party STA can content the channel early.

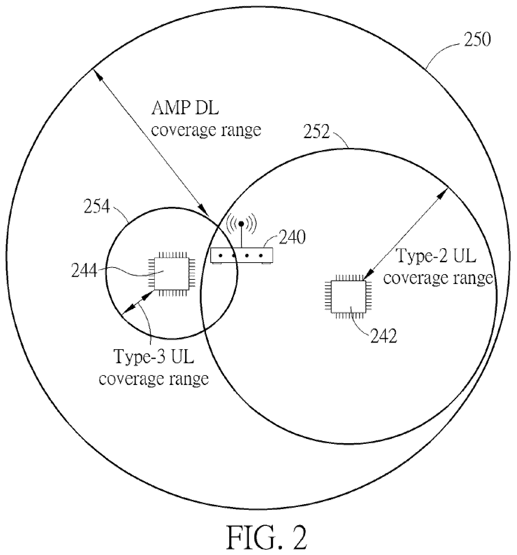

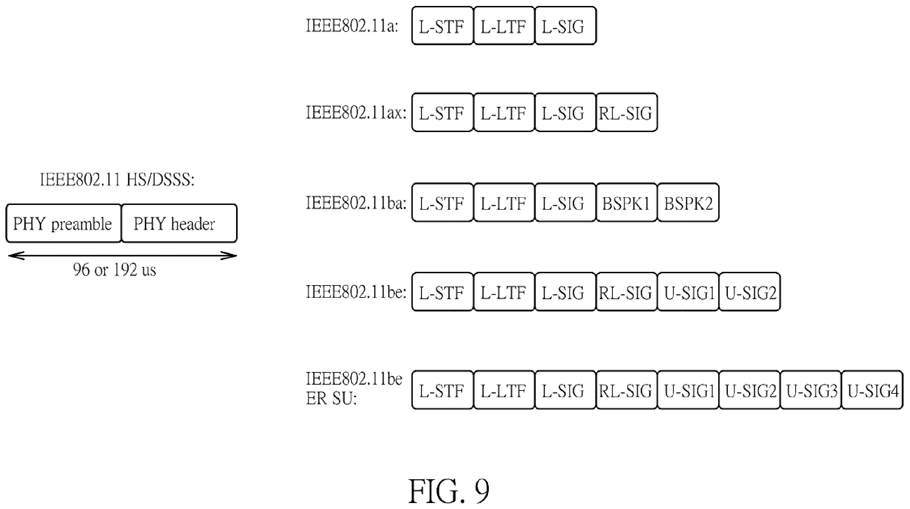

FIG. 2 is a diagram illustrating multiple coverage ranges for multiple transmissions according to an embodiment of the present disclosure, wherein an AMP AP 240 may be implemented by one of the wireless communication devices 100 and 200 shown in FIG. 1, and each of an active transmission-type AMP STA 242 and a type-3 AMP STA 244 may be implemented by another of the wireless communication devices 100 and 200. As shown in FIG. 2, a coverage range of the DL PPDU transmission and the CTS-to-Self transmission performed by the AMP AP 240 may be denoted by "an AMP DL coverage range 250", a coverage range of the TB UL PPDU transmission performed by the active transmission-type AMP STA 242 may be denoted by "a type-2 UL coverage range 252", and a coverage range of the TB UL PPDU transmission performed by the type-3 AMP STA 244 may be denoted by "a type-3 UL coverage range 254". Under a condition that the CTS-to-Self mechanism is adopted, since either the active transmission-type AMP STA 242 or the type-3 AMP STA 244 is focus on low power devices or no power devices, both the type-2 UL coverage range 252 and the type-3 UL coverage range 254 are located within the AMP DL coverage range 250. In addition, due to the low power/no power storage characteristics of the active transmission-type AMP STA 242 and the type-3 AMP STA 244, the TB UL PPDU for the active transmission-type AMP STA 242 or the type-3 AMP STA 244 does not need to include a spoofing preamble with 20 MHz. In addition, the DL PPDU includes the spoofing preamble, and legacy devices can understand the spoofing preamble and will not contend the channel. Therefore, the collision is reduced. For an AMP PPDU, the spoofing preamble can be one of formats shown in FIG. 9 or other formats. The bandwidth of the spoofing preamble is wider than that of the AMP package in the AMP PPDU.

The following shows several frame exchange methods between an AMP AP 300 and an AMP STA 302, wherein the AMP AP 300 may be implemented by one of the wireless communication devices 100 and 200 shown in FIG. 1, and the AMP STA 302 may be implemented by another of the wireless communication devices 100 and 200.

In option 1, the AMP AP 300 may content channel based on energy detection (ED) and transmit UL PPDU if it gains the medium access.

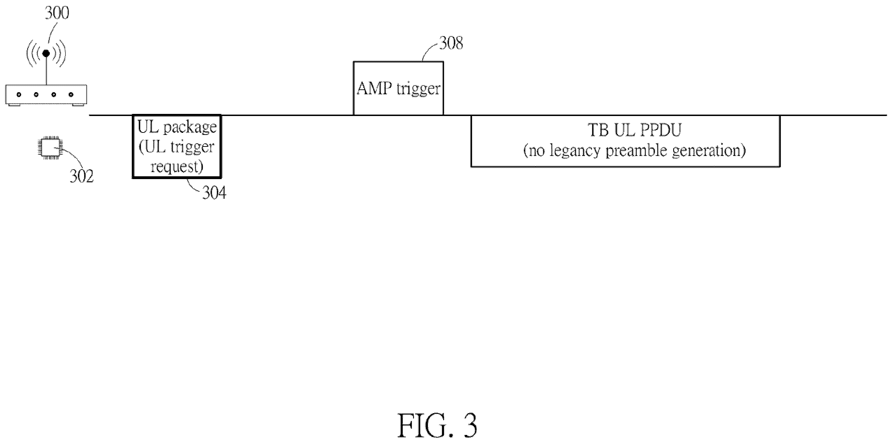

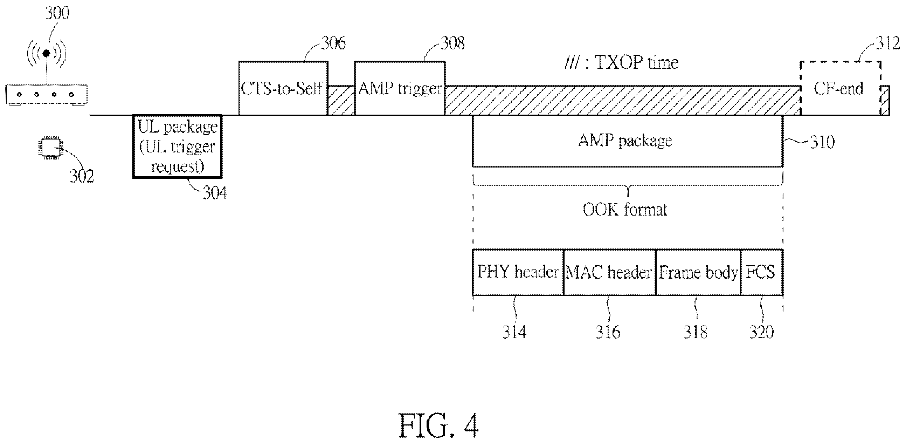

In option 2, under a situation that the AMP STA 302 requires to perform the UL transmission, the AMP STA 302 may transmit a UL packet 304 carrying a trigger request, and then the AMP AP 300 may transmit an AMP trigger 308 (e.g., a trigger frame) to trigger the AMP STA 302 to transmit a TB UL PPDU, wherein the UL packet 304 may be short UL packet, and TB UL PPDU may comprise the AMP package 310 shown in FIG. 4. FIG. 3 shows the option 2.

In option 3, the AMP AP 300 may directly transmit the AMP trigger 308 for triggering the AMP STA 302 to perform the UL transmission, without receiving an UL trigger request from the AMP STA 302. For example, the AMP AP 300 may transmit the AMP trigger 308 based on time slots pre-agreed between the AMP AP 300 and the AMP STA 302. In another example, the AMP AP 300 may regularly transmit the AMP trigger 308.

FIG. 4 is a diagram illustrating a frame exchange between an AMP AP 300 and an AMP STA 302 according to an embodiment of the present disclosure, wherein the AMP AP 300 may be implemented by one of the wireless communication devices 100 and 200 shown in FIG. 1, and the AMP STA 302 may be implemented by another of the wireless communication devices 100 and 200. In this embodiment, under a situation that the AMP STA 302 requires to perform the UL transmission, the AMP STA 302 may transmit an UL package 304 to the AMP AP 300, wherein an UL trigger request is carried in the UL package 304 for requesting a trigger frame. In response to reception of the UL package 304, the AMP AP 300 may transmit a CTS-to-Self frame 306 for obtaining a transmission opportunity (TXOP). Afterwards, the AMP AP 300 may transmit an AMP trigger 308 (e.g., a trigger frame) via the channel, wherein the AMP trigger 308 may be included in an AMP package transmitted by the AMP AP 300, and the AMP trigger 308 may trigger the AMP STA 302 to perform the UL transmission.

In the option 2 and the embodiment shown in the FIG. 4, before transmitting the UL package 304, the AMP STA 302 may perform an energy detection (ED) operation upon the channel for gaining the channel access, and may compare a detection result with a target ED threshold (EDT) in order to determine whether the channel is idle. For setting of the target EDT, the IEEE 802.11 standards regulate a predetermined bandwidth (e.g., 20 MHz) and a predetermined EDT corresponding to the predetermined bandwidth. As a result, the AMP STA 302 may set the target EDT according to the predetermined bandwidth and the predetermined EDT, and more particularly, may perform a scaling operation upon the predetermined EDT according to the predetermined bandwidth and a target bandwidth, in order to obtain the target EDT, wherein the target EDT is less than or equal to the predetermined EDT. For example, the target EDT: x dBm/MHz ≤ -82 dBm measured within 20MHz. For example, under a condition that the target bandwidth is 4 MHz and the predetermined bandwidth is 20 MHz, the AMP STA 302 may obtain the target EDT by scaling down the predetermined EDT by 5.

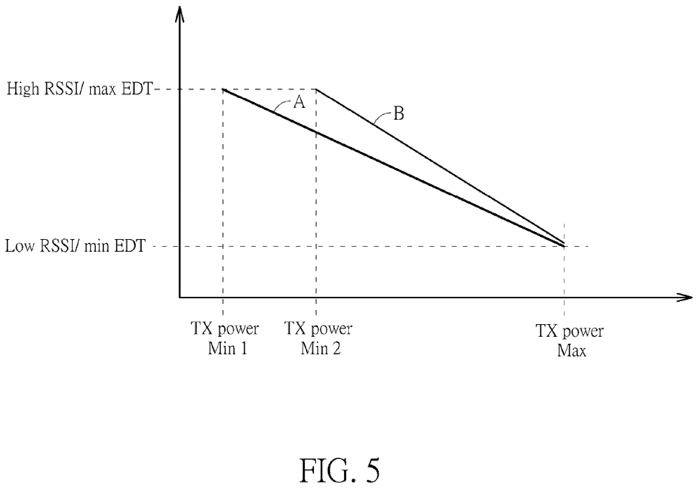

In addition, after the AMP STA 302 gains the channel access, the AMP STA 302 may control an UL transmitting (TX) power. Specifically, refer to FIG. 5. FIG. 5 is a diagram illustrating a control scheme of an UL TX power according to an embodiment of the present disclosure. As shown in FIG. 5, the AMP STA 302 may control the UL TX power based on the target EDT or a received signal strength indicator (RSSI) from the AMP AP 300, wherein a line "A" corresponds to the target EDT, and a line "B" corresponds to the RSSI. For example, when the target EDT is set to have the maximum value (labeled as "max EDT" in FIG. 5), the AMP STA 302 may control the UL TX power as a first minimum value (labeled as "TX power Min 1" in FIG. 5). when the RSSI from the AMP AP 300 is high (labeled as "High RSSI" in FIG. 5), the AMP STA 302 may control the UL TX power as a second minimum value (labeled as "TX power Min 2" in FIG. 5). When the RSSI from the AMP AP 300 is low (labeled as "Low RSSI" in FIG. 5) or the target EDT is set to have the minimum value (labeled as "min EDT" in FIG. 5), the AMP STA 302 may control the UL TX power as the maximum value (labeled as "TX power Max" in FIG. 5). This is for illustration only, and is not meant to be a limitation of the present disclosure. The AMP STA 302 may dynamically adjust the UL TX power to a value between the maximum value and the second minimum value based on the RSSI, or may dynamically adjust the UL TX power to a value between the first minimum value and the maximum value based on the EDT.

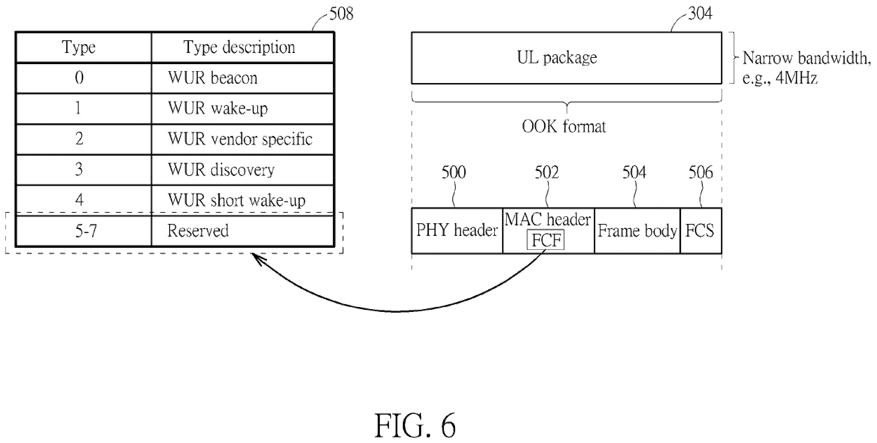

FIG. 6 is a diagram illustrating a format of the UL AMP package 304 shown in FIG. 3 and FIG. 4 according to an embodiment of the present disclosure. As shown in FIG. 6, the UL AMP package 304 may include a physical (PHY) header 500, an MAC header 502, a frame body 504, and a frame check sequence (FCS) 506. The MAC header 502 may include a frame control field (labeled as "FCF" in FIG. 6), and one of multiple reserved entries of a type subfield 508 in the frame control field may be utilized to indicate that the type of the UL AMP package 304 is a trigger request. The types of an UL AMP package may include a trigger request, an association request, an authentication request, a probe request, etc. The one of multiple reserved entries of the type subfield 508 in the frame control field acts as a trigger request indicator. For example, multiple entries of the type subfield 508 may include entry 0 - entry 7, wherein the entry 0 corresponds to a wake-up radio (WUR) beacon type, the entry 1 corresponds to a WUR wake-up type, the entry 2 corresponds to a WUR vendor specific type, the entry 3 corresponds to a WUR discovery type, the entry 4 corresponds to a WUR short wake-up type, and the entries 5 - 7 act as the multiple reserved entries. As a result, one of the entries 5 - 7 may be utilized to indicate that the UL trigger request is carried in the UL AMP package 304. In some embodiments, a specific pattern of a synchronization (for brevity, hereinafter referred to as "sync") field in the PHY header 500 may be utilized as a trigger request indicator. The specific pattern of the sync field in the PHY header 500 acts as the trigger request indicator. That is, when the AMP AP 300 receives the UL AMP package 304 including the PHY header 500 with the specific pattern, the AMP AP 300 may interpret the specific pattern as an UL trigger request. Pattern designs can use a maximum length sequence or pseudorandom sequence search.

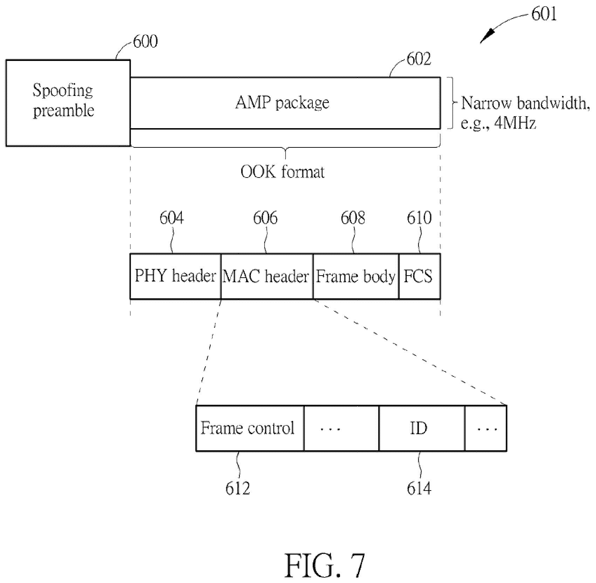

FIG. 7 is a diagram illustrating a format of a DL PPDU 601 transmitted by the AMP AP 300 shown in FIG. 3 and FIG. 4 according to an embodiment of the present disclosure. As shown in FIG. 7, the DL PPDU 601 may include a spoofing preamble 600 with 20 MHz and an OFDM format and an AMP package 602, wherein the AMP package 602 has an OOK format, and includes a PHY header 604, an MAC header 606, a frame body 608, and an FCS 610, wherein a client identification (ID; such as a STA ID) may be carried in the MAC header 606. It should be noted that, a trigger frame may be carried in the AMP package 602, and the MAC header 606 may include an indicator for indicating that the trigger frame is carried in the AMP package 602 for acting as a trigger frame indicator. In detail, the MAC header 606 may include a frame control field 612 and an ID field 614 carrying the client ID, and the frame control field 612 may include a type subfield similar to the type subfield 508 shown in FIG. 6. The reserved entries of the type subfield in the frame control field 612 may be utilized to indicate that the trigger frame is carried by the AMP package 602. For example, by combining the DL direction and the UL direction, within the type subfield 508 in the MAC header 502 of the UL AMP package 304, the same reserved entry utilized to indicate the UL trigger request carried by the UL AMP package 304 may be further utilized to indicate that the trigger frame is carried by the AMP package 602. That is, by combining the DL direction and the UL direction, the same reserved entry may be utilized to indicate whether the type of a received AMP package is a trigger frame or a trigger request. Specifically, when an AMP package is a DL AMP package, the same reserved entry may indicate the type of the AMP package is a trigger frame. When an AMP package is a UL AMP package, the same reserved entry may indicate the type of the AMP package is a trigger request.

In some embodiments, the frame body 608 may include an indicator for indicating that the trigger frame is carried by the AMP package 602. The indicator in the frame body 608 acts as a trigger frame indicator.

In some embodiments, the PHY header 604 may act as a trigger frame indicator. For example, a specific pattern of a sync field in the PHY header 604 may be utilized to wake up the AMP STA 302 and trigger the UL transmission of the AMP STA 302. The specific pattern of a sync field in the PHY header 604 may be interpreted as a trigger frame. It should be noted that, by combining the DL direction and the UL direction, the specific pattern of the sync field in PHY header 500 may be utilized as the specific pattern of the sync field in the PHY header 604 of the AMP package 602 included in the DL PPDU 601. The same specific pattern of the sync field in the PHY header 500/604 may act as a trigger request indicator or a trigger frame indicator. That is, by combining the DL direction and the UL direction, the same specific pattern of the sync field in the PHY header 500/604 may be interpreted as a trigger request or a trigger frame. Specifically, when an AMP package is a DL AMP package, the same specific pattern of the sync field in the PHY header may be interpreted as a trigger frame. When an AMP package is a UL AMP package, the same specific pattern of the sync field in the PHY header may be interpreted as a trigger request.

Refer back to FIG. 4. After receiving the AMP trigger 308 from the AMP AP 300, the AMP STA 302 may transmit an AMP package 310 to the AMP AP 300, wherein the AMP package 310 may be included in a TB UL PPDU, and the TB UL PPDU does not include a spoofing preamble with 20 MHz. The AMP package 310 adopts an OOK format, including a PHY header 314, an MAC header 316, a frame body 318, and a FCS 320. The PHY header 314 may be utilized by the reception side (i.e., the AMP AP 300) to perform a synchronization operation and package detection. It should be noted that, since a pattern of the sync field in the PHY header 604 of the AMP package 602 transmitted from the AMP AP 300 to the AMP STA 302 is different from that of the sync field in the PHY header 314 of the AMP package 310 transmitted from the AMP STA 302 to the AMP AP 300, the PHY header 314 of the AMP package 310 can act as an UL PPDU indicator for reception of the AMP AP 300. Afterwards, if any TB UL PPDU is not received by the AMP AP 300 for an estimation period, the AMP AP 300 may transmit a CF-end frame 312 for truncating or terminating the TXOP.

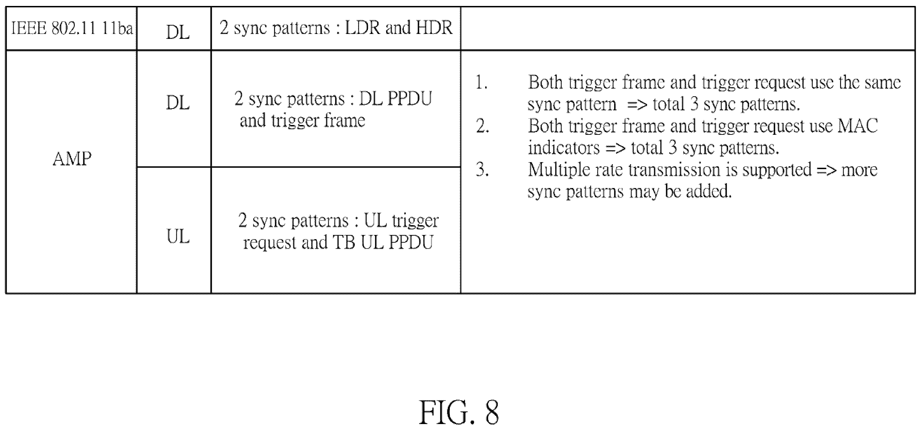

FIG. 8 is a table illustrating number of patterns of a sync field in a PHY header according to an embodiment of the present disclosure. The pattern of a sync field is also referred to as "sync pattern" for brevity. As shown in FIG. 8, in the IEEE 802.11 ba standard, there are two sync patterns for a DL PPDU, and one of the two sync patterns is used for indicating a DL PPDU with low data rate (labeled as "LDR" in FIG. 8 for brevity), and the other of the two sync patterns is used for indicating a DL PPDU with high data rate (labeled as "HDR" in FIG. 8 for brevity). For an AMP PPDU, there are two sync patterns for a DL PPDU, one of the two sync patterns is used for indicating a DL PPDU, and the other of the two sync patterns is a specific sync pattern used as a trigger frame. There are two sync patterns for a UL AMP PPDU, one of the two sync patterns is used for indicating a TB UL PPDU, and the other of the two sync patterns is a specific sync pattern used as a trigger request. If both the trigger frame and the trigger request use the same sync pattern, total 3 sync patterns are used. If both the trigger frame and the trigger request are indicated through indicators in MAC headers, total 2 sync patterns are used (then no specific sync patterns be used as a trigger frame and a trigger request). If multiple rate transmission is supported, then more sync patterns may be added.

FIG. 9 is a diagram illustrating formats of a spoofing preamble according to an embodiment of the present disclosure. As shown in FIG. 9, for the IEEE 802.11 high rate (HR)/direct sequence spread spectrum (DSSS), a total length of a PHY preamble and a PHY header may be 96 microseconds (µs) or 192 µs. For the IEEE 802.11 11a standard, a spoofing preamble may include a legacy short training field (L-STF), a legacy long training field (L-LTF), and a legacy signal field (L-SIG). For the IEEE 802.11 11ax standard, a spoofing preamble may include an L-STF, an L-LTF, an L-SIG, and a repeated legacy signal field (RL-SIG). For the IEEE 802.11 11ba standard, a spoofing preamble may include an L-STF, an L-LTF, an L-SIG, a Binary Phase Shift Keying 1 field (BSPK1), and a Binary Phase Shift Keying 2 field (BSPK2). For the IEEE 802.11 11be standard, a spoofing preamble may include an L-STF, an L-LTF, an L-SIG, an RL-SIG, a universal signal 1 field (U-SIG1), and a universal signal 2 field (U-SIG2). For the IEEE 802.11 11be extended range (ER) single user (SU) standard, a spoofing preamble may include an L-STF, an L-LTF, an L-SIG, an RL-SIG, a U-SIG1, a U-SIG2, a universal signal 3 field (U-SIG3), and a universal signal 4 field (U-SIG4).

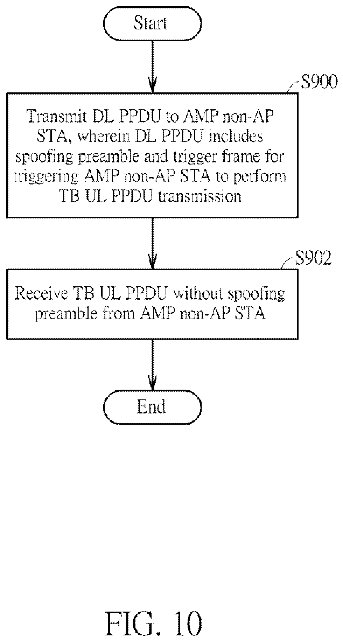

FIG. 10 is a flow chart of a method for performing communications between an AMP AP and an AMP STA according to an embodiment of the present disclosure. Provided that the result is substantially the same, the steps are not required to be executed in the exact order shown in FIG. 10. For example, the method shown in FIG. 10 may be employed by an AMP AP that is implemented by the wireless communication device 100/200 shown in FIG. 1. For better comprehension, the method may be illustrated with the flow shown in FIG. 10, but the present disclosure is not limited thereto. According to some embodiments, one or more steps may be added, deleted, or changed in the flow shown in FIG. 10.

In Step S900, a DL PPDU is transmitted to the AMP non-AP STA, wherein the DL PPDU includes a spoofing preamble and a trigger frame for triggering the AMP non-AP STA to perform a TB UL PPDU transmission.

In some embodiments, the bandwidth of the spoofing preamble is 20MHz, the bandwidth of the trigger frame is less than 20MHz, and the bandwidth of the TB UL PPDU is less than 20MHz.

In some embodiments, the AMP AP receives report information from the AMP non-AP STA before transmitting the DL PPDU comprising the spoofing preamble and the trigger frame, wherein the report information indicates a type of the AMP non-AP STA. The type of the AMP non-AP STA may be an active transmission-type AMP non-AP STA or a backscattering-type AMP non-AP STA from three types comprising the active transmission-type AMP non-AP STA, the backscattering-type AMP non-AP STA, and an AMP enabled STA. If the AMP non-AP STA is type-3 AMP STA, the AMP non-AP STA may report its classification type as backscattering-type AMP non-AP STA to the AMP AP by transmitting report information. If the AMP non-AP STA is type-2 AMP STA, the AMP non-AP STA will report its classification type as active transmission-type AMP non-AP STA to the AMP AP by transmitting report information.

In Step S902, a TB UL PPDU is received without any spoofing preamble from the AMP non-AP STA.

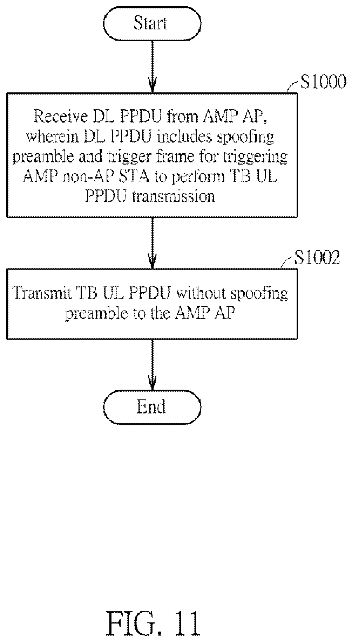

FIG. 11 is a flow chart of a method for performing communications between an AMP AP and an AMP STA according to another embodiment of the present disclosure. Provided that the result is substantially the same, the steps are not required to be executed in the exact order shown in FIG. 11. For example, the method shown in FIG. 11 may be employed by an AMP STA that is implemented by the wireless communication device 100/200 shown in FIG. 1. For better comprehension, the method may be illustrated with the flow shown in FIG. 11, but the present disclosure is not limited thereto. According to some embodiments, one or more steps may be added, deleted, or changed in the flow shown in FIG. 11.

In Step S1000, a DL PPDU is received from the AMP AP, wherein the DL PPDU includes a spoofing preamble and a trigger frame for triggering the AMP non-AP STA to perform a TB UL PPDU transmission.

In Step S1002, a TB UL PPDU without any spoofing preamble is transmitted to the AMP AP.

In summary, by the methods of the present disclosure, the UL PPDU and DL PPDU techniques may be applied to the active transmission-type AMP STA. Some aspects of the UL PPDU and DL PPDU techniques may be applied to a backscattering-type AMP non-AP STA.

## Claims

1. A method for performing communications between an ambient power (AMP) access point (AP) (100, 200) and an AMP non-AP station (STA) (100, 200), **characterized by**:
transmitting, by the AMP AP (100, 200), a downlink (DL) physical layer protocol data unit (PPDU) to the AMP non-AP STA (100, 200), wherein the DL PPDU comprises a spoofing preamble and a trigger frame (308) for triggering the AMP non-AP STA (100, 200) to perform a trigger-based (TB) uplink (UL) PPDU transmission; and
receiving, by the AMP AP (100, 200), a TB UL PPDU without any spoofing preamble from the AMP non-AP STA (100, 200).

2. The method of claim 1, further **characterized by**:
receiving, by the AMP AP (100, 200), report information from the AMP non-AP STA (100, 200), wherein the report information indicates a type of the AMP non-AP STA (100, 200).

3. The method of any one of claims 1 or 2, **characterized in that** the type of the AMP non-AP STA (100, 200) is an active transmission-type AMP non-AP STA or a backscattering-type AMP non-AP STA.

4. The method of any one of claims 1 to 3, **characterized in that** each of the DL PPDU and the TB UL PPDU comprises an AMP package (310, 602), and each of the AMP package uses an on-off keying (OOK) format, wherein the AMP package (602) in the DL PPDU carries the trigger frame, wherein the AMP package comprises a physical (PHY) header (604), a media access control (MAC) header (606), and a frame body (608).

5. The method of claim 4, **characterized in that** a pattern of a sync field in the PHY header (604) in the AMP package (602) comprised in the DL PPDU is different from a pattern of a sync field in the PHY header (314) in the AMP package (310) comprised in the TB UL PPDU, and wherein the pattern of the sync field in the PHY header (314) in the AMP package (310) comprised in the TB UL PPDU acts as an UL transmission indicator.

6. The method of any one claims 1 to 5, further **characterized by**:
receiving, by the AMP AP, a UL AMP package (304) from the AMP non-AP STA before transmitting the DL PPDU comprising the trigger frame (308), wherein the UL AMP package carries a trigger request, wherein a MAC header (502) of the UL AMP package comprises an indicator for indicating that the trigger request is carried in the UL AMP package and comprises a frame control field (508), the frame control field comprises a type subfield, and one of multiple reserved entries of the type subfield acts as the indicator.

7. The method of any one of claims 1 to 6, further **characterized by**: receiving, by the AMP AP, a UL AMP package (304) from the AMP non-AP STA before transmitting the DL PPDU comprising the trigger frame (308), wherein a pattern of a sync field in a PHY header (500) of the UL AMP package (304) acts as the trigger request.

8. The method of any one of claims 1 to 7, further **characterized by**:
transmitting, by the AMP AP, a clear to send (CTS)-to-self frame (306) in order to obtain a transmission opportunity (TXOP) before transmitting the DL PPDU comprising the trigger frame (308); and
in response to any TB UL PPDU not being received for an estimation period, transmitting, by the AMP AP, a frame to truncate or terminate the TXOP.

9. The method of any one of claims 1 to 8, **characterized in that** the DL PPDU comprises the spoofing preamble (600) and a DL AMP package (602), and a MAC header (606) of the DL AMP package comprises an indicator for indicating that the trigger frame (308) is carried in the DL AMP package, wherein the MAC header of the DL AMP package comprises a frame control field (612), the frame control field comprises a type subfield, and one of multiple reserved entries of the type subfield acts as the indicator.

10. The method of any one of claims 1 to 9, **characterized in that** the DL PPDU comprises the spoofing preamble (600) and a DL AMP package (602), and a frame body (608) of the DL AMP package comprises an indicator for indicating that the trigger frame (308) is carried in the DL AMP package.

11. A method for performing communications between an ambient power (AMP) access point (AP) (100, 200) and an AMP non-AP station (STA) (100, 200), **characterized by**:
receiving, by the AMP non-AP STA, a downlink (DL) physical layer protocol data unit (PPDU) from the AMP AP, wherein the DL PPDU comprises a spoofing preamble (600) and a trigger frame (308) for triggering the AMP non-AP STA to perform a trigger-based (TB) uplink (UL) PPDU transmission; and
transmitting, by the AMP non-AP STA, a TB UL PPDU without a spoofing preamble to the AMP AP.

12. The method of claim 11, further **characterized by**:
transmitting, by the AMP non-AP STA, report information to the AMP AP before receiving the trigger frame (308), wherein the report information indicates a type of the AMP non-AP STA, and the type of the AMP non-AP STA is an active transmission-type AMP non-AP STA or a backscattering-type AMP non-AP STA.

13. The method of claim 1 or claim 11, **characterized in that** the bandwidth of the spoofing preamble (600) is 20MHz, the bandwidth of the trigger frame (308) is less than 20MHz, and the bandwidth of the TB UL PPDU is less than 20MHz.

14. The method of any one of claims 11 to 13, **characterized in that** each of the DL PPDU and the TB UL PPDU comprises an AMP package (310, 602), and each of the AMP package uses an on-off keying (OOK) format, wherein the AMP package in the DL PPDU carries the trigger frame (308).

15. The method of any one of claims 11 to 14, further **characterized by**:
transmitting, by the AMP non-AP STA (100, 200), an UL AMP package (304) to the AMP AP (100, 200), wherein a MAC header (502) of the UL AMP package comprises an indicator for indicating that a trigger request is carried in the UL AMP package;
determining, by the AMP non-AP STA (100, 200), a target energy detection threshold (EDT) according to a predetermined bandwidth and a predetermined EDT, wherein the predetermined bandwidth and the predetermined EDT are regulated by IEEE 802.11 standards, comprising:
performing, by the AMP non-AP STA (100, 200), a scaling operation upon the predetermined EDT according to the predetermined bandwidth and a target bandwidth for a UL transmission of the AMP non-AP STA (100, 200) in order to generate the target EDT, wherein the target EDT is less than or equal to the predetermined EDT; and
controlling, by the AMP non-AP STA (100, 200), an UL transmitting (TX) power according to the target EDT.
